# EUROPÄISCHE PATENTSCHRIFT

(11) **EP 2 199 156 B1**
(45) Veröffentlichungstag und Bekanntmachung des Hinweises auf die Patenterteilung: **08.02.2012**
(21) Anmeldenummer: 09015377.6
(22) Anmeldetag: 11.12.2009
(51) Int. Cl.: B60R 11/00

(54) **Klemmvorrichtung**
Clamping device
Dispositif de serrage

(30) Priorität: 17.12.2008 DE 202008016626 U
(43) Veröffentlichungstag der Anmeldung: 23.06.2010
(73) Patentinhaber: Sauermann, Hans, 85119 Ernsgaden (DE)
(72) Erfinder: Sauermann, Hans, 85119 Ernsgaden (DE)
(74) Vertreter: Witzany, Manfred

(56) Entgegenhaltungen:
- DE-A1- 2 836 506
- DE-U1-202006 009 657
- US-A1- 2007 210 617
- US-A1- 2008 073 822

## Beschreibung

Die Erfindung betrifft eine Klemmvorrichtung zum Festlegen eines Gegenstandes an einer Säule eines Fahrzeugs.

Aus der DE 20 2006 009 657 U1 ist eine Klemmvorrichtung an einer Säule eines Fahrzeugs zum Festlegen eines Gegenstandes bekannt, wobei die Säule mindestens zwei Wände aufweist, die vom Säuleninnenraum aus betrachtet einen erhabenen Winkel einschliessen, wobei die Klemmvorrichtung gegeneinander verspannbare Spannbacken aufweist, die durch Spannmittel gegeneinander verspannbar und in Anlage mit der Säule bringbar sind. Diese Klemmvorrichtung hat sich in der Praxis gut bewährt und bildet den Ausgangspunkt der vorliegenden Neuerung.

Aus der US 2008/073822 A1 ist eine Klemmvorrichtung für ein winkeliges Werkstück bekannt. Dieses Werkstück ist ebenflächig begrenzt und wird von der Klemmvorrichtung mittels zweier Backen erfasst. Diese beiden Backen erfassen das Werkstück auf der Winkelinnen- bzw. auf der Winkelaußenseite.

Aus der DE 28 36 506 A1 ist eine Schraubzwinge mit Backen zum Erfassen eines winkeligen Werkstücks bekannt. Diese Backen erfassen das Werkstück einerseits von der Winkelinnen- und andererseits von der Winkelaußenseite.

Der Erfindung liegt die Aufgabe zugrunde, eine Klemmvorrichtung der eingangs genannten Art zu schaffen, die sich durch eine verbesserte Haltewirkung auszeichnet.

Diese Aufgabe wird erfindungsgemäß mit den Merkmalen des Patentanspruchs 1 gelöst.

Die Klemmvorrichtung gemäß Anspruch 1 dient zum Festlegen eines Gegenstandes an einer Säule eines Fahrzeugs, wobei insbesondere daran gedacht ist, daß auf den Gegenstand zum Teil erheblich Drehmomente in Richtung der Längserstreckung der Säule einwirken können. Die Säule weist dabei mindestens zwei Wände auf, die vom Säuleninnenraum aus betrachtet einen erhabenen Winkel einschließen. Diese Wände begrenzen daher eine nutartige Vertiefung in der Säule. Falls zwei derartige Vertiefungen einander gegenüberliegend vorgesehen sind, wird die Säule als 8-er Profil bezeichnet. Derartige Profile kommen in der Praxis recht häufig vor. Die Klemmvorrichtung weist gegeneinander durch Spannmittel verspannbare Spannbacken auf, die in Anlage mit der Säule bringbar sind. Um insbesondere hohen Drehmomenten am Gegenstand widerstehen zu können, liegt mindestens eine der Spannbacken an beiden Wänden an, die den erhabenen Winkel einschließen. Dies hat zwar den Nachteil, daß die Spannbacke in ihrer Form wenigstens im Teilbereich an die Säule angepaßt sein muß, die Anlage an beiden Wänden, die den erhabenen Winkel einschließen bringt jedoch den Vorteil, daß die Klemmvorrichtung hohen Drehmomenten widerstehen kann. Beim Auftreten von Drehmomenten am Gegenstand wird die Spannbacke stets gegen eine der beiden Wände gepreßt, so daß ein Abziehen der Spannbacke von der Säule unmöglich ist.

Zur Vereinfachung der Klemmvorrichtung ist es gemäß Anspruch 2 vorteilhaft, wenn mindestens eine der Spannbakken gegen eine der Wände durch die Spannmittel auf Spannung gehalten ist und gegen die andere der Wände kraftlos anliegt. Dies vereinfacht die Anordnung und den Aufbau der erforderlichen Spannmittel, wobei trotzdem eine ausreichende Drehmomentsicherung gegeben ist.

Da die Klemmvorrichtung eine hohe Stabilität gewährleistet, ist es gemäß Anspruch 3 möglich, diese aus nur zwei Spannbacken zu bilden. Auch dies vereinfacht den Aufbau der Klemmvorrichtung erheblich.

Gemäß Anspruch 4 ist es günstig, wenn mindestens eine der Spannbacken wenigstens im Teilbereich an die Form der Säule angepaßt ist. Dies schafft einen innigen Kontakt zwischen der Spannbacke und der Säule. Diese Maßnahme liefert auch keinen Nachteil, da bedingt durch die grundsätzliche Ausbildung der Klemmvorrichtung diese an eine spezielle Säule angepaßt sein muß. Somit kann die Klemmvorrichtung auch in ihrer Form konkret an die Säule angepaßt sein.

Zur Erzielung einer besonders festen Verbindung der Klemmvorrichtung mit der Säule ist es gemäß Anspruch 5 vorteilhaft, wenn mindestens eine der Spannbacken beidseitig mit einer von den Wänden gebildeten Nut mit der Säule in Anlage bringbar ist. Auf diese Weise ergibt sich ein noch innigerer, formschlüssiger Kontakt der Spannbakke mit der Säule, was die Haltewirkung verbessert.

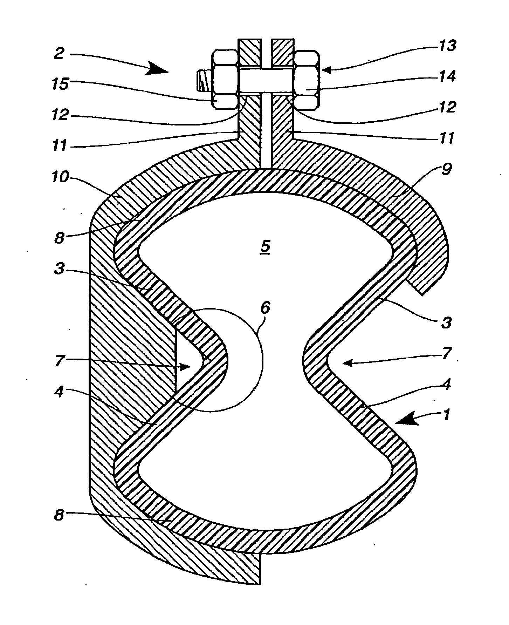

Der Erfindungsgegenstand wird beispielhaft anhand der Zeichnung erläutert, ohne den Schutzumfang zu begrenzen. Die einzige Figur zeigt eine Schnittdarstellung einer Säule 1 mit einer Klemmvorrichtung 2. Die Säule 1 weist Wände 3, 4 auf, die vom Innenraum 5 der Säule 1 aus betrachtet erhabene Winkel 6 einschließen. Diese Wände 3, 4 begrenzen eine Nut 7. An die Wände 3, 4 schließen sich gebogene Konturen 8 an, an die allerdings nur schlecht festgeklemmt werden kann. Den Wänden 3, 4 gegenüberliegend sind weitere Wände 3, 4 vorgesehen, die eine weitere Nut 7 begrenzen. Diese zweite Nut 7 ist zur ersten Nut 7 im wesentlichen spiegelsymmetrisch aufgebaut.

Die Klemmvorrichtung 2 besteht aus zwei Spannbacken 9, 10. Die erste Spannbacke 9 greift dabei im wesentlichen an der gebogenen Kontur 8 der Säule 1 an. Die zweite Spannbacke 10 liegt dagegen an den beiden Wänden 3, 4, die die Nut 7 begrenzen und an den beiden angrenzenden gebogenen Konturen 8 an. Damit ist die Spannbacke 10 in großen Teilen an die Form der Säule 1 angepaßt. Beide Spannbacken 9, 10 besitzen Flansche 11, die von Bohrungen 12 durchsetzt sind. Diese Bohrungen 12 sind von einem Klemmittel 13 durchsetzt. Das Klemmittel 13 wird dabei von einer Schraube 14 und einer zugehörigen Mutter 15 gebildet.

Durch Festziehen des Klebmittels 13 wird die erste Spannbacke 9 gegen die gebogene Kontur 8 der Säule 1 gezogen. Außerdem wird die zweite Spannbacke 10 sowohl gegen beide gebogene Konturen 8 als auch gegen die Wand 3 gezogen. An der Wand 4 liegt die zweite Spannbacke 10 daher nur kraftlos an. Wirkt ein Drehmoment auf die Klemmvorrichtung 2, die dieses gegen den Uhrzeigersinn zu verschwenken versucht, so verhindert die Anlage der zweiten Spannbacke 10 an der Wand 4, daß die gesamte Klemmvorrichtung 2 von der Säule 1 abgezogen werden kann. Diese Bedingung wird bis zu sehr hohen Drehmomenten sichergestellt, so daß die Klemmvorrichtung 2 auch zur Festlegung von sicherheitsrelevanten Gegenständen wie beispielsweise Rückhaltesysteme oder dergleichen eingesetzt werden kann.

### Bezugszeichenliste

- 1: Säule
- 2: Klemmvorrichtung
- 3, 4: Wand
- 5: Innenraum
- 6: erhabener Winkel
- 7: Nut
- 8: gebogene Kontur
- 9: erste Spannbacke
- 10: zweite Spannbacke
- 11: Flansch
- 12: Bohrung
- 13: Klemmittel
- 14: Schraube
- 15: Mutter

## Patentansprüche

1. Klemmvorrichtung an einer Säule (1) eines Fahrzeugs zum Festlegen eines Gegenstandes, wobei die Säule (1) mindestens zwei Wände (3, 4) aufweist, die vom Säuleninnenraum (5) aus betrachtet einen erhabenen Winkel (6) einschließen und an die Wände (3, 4) gebogene Konturen (8) anschließen, wobei die Klemmvorrichtung (2) gegeneinander verspannbare Spannbacken (9, 10) aufweist, die durch Spannmittel (13) gegeneinander verspannbar und in Anlage mit der Säule (1) bringbar sind, wobei eine erste Spannbacke (10) an beiden, den erhabenen Winkel (6) einschließenden Wänden (3, 4) und an den angrenzenden gebogenen Konturen (8) anliegt.

2. Klemmvorrichtung nach Anspruch 1, **dadurch gekennzeichnet, daß** die erste Spannbacke (10) gegen eine der den erhabenen Winkel (6) einschließenden Wände (3) durch die Spannmittel (13) auf Spannung gehalten ist und gegen die andere der Wände (4) anliegt.

3. Klemmvorrichtung nach Anspruch 1 oder 2, **dadurch gekennzeichnet, daß** zwei Spannbacken (9, 10) vorgesehen sind.

4. Klemmvorrichtung nach mindestens einem der Ansprüche 1 bis 3, **dadurch gekennzeichnet, daß** mindestens die erste Spannbacke (10) an die Form der Säule (1) angepaßt ist.

5. Klemmvorrichtung nach mindestens einem der Ansprüche 1 bis 4, **dadurch gekennzeichnet, daß** die erste Spannbacke (10) beidseitig einer von den, den erhabenen Winkel (6) einschließenden Wänden (3, 4) gebildeten Nut (7) mit der Säule in Anlage bringbar ist.

## Claims

1. Clamping device on a pillar (1) of a vehicle for securing an object, wherein the pillar (1) has at least two walls (3, 4) which, as viewed from the pillar interior (5), enclose a reflex angle (6), and the walls (3, 4) are adjoined by curved contours (8), wherein the clamping device (2) has clamping jaws (9, 10) which are braced in relation to each other and can be braced in relation to each other by clamping means (13) and can be brought into contact with the pillar (1), wherein a first clamping jaw (10) bears against the two walls (3, 4) which enclose the reflex angle (6) and against the adjacent, curved contours (8).

2. Clamping device according to Claim 1, **characterized in that** the first clamping jaw (10) is kept stressed against one of the walls (3) enclosing the reflex angle (6) by the clamping means (13) and bears against the other of the walls (4).

3. Clamping device according to Claim 1 or 2, **characterized in that** two clamping jaws (9, 10) are provided.

4. Clamping device according to at least one of Claims 1 to 3, **characterized in that** at least the first clamping jaw (10) is matched to the shape of the pillar (1).

5. Clamping device according to at least one of Claims 1 to 4, **characterized in that** the first clamping jaw (10) can be brought into contact with the pillar on both sides of a groove (7) which is formed by the walls (3, 4) which enclose the reflex angle (6).

## Revendications

1. Dispositif de serrage sur une colonne (1) d'un véhicule, pour la fixation d'un objet, la colonne (1) présentant au moins deux parois (3, 4), qui, vues depuis l'espace interne de la colonne (5), forment un angle saillant (6) et des contours (8) cintrés se raccordant aux parois (3, 4), le dispositif de serrage (2) présentant des mâchoires de serrage (9, 10) pouvant être serrées l'une contre l'autre, lesquelles peuvent être serrées l'une contre l'autre par des moyens de serrage (13) et peuvent être amenées en appui contre la colonne (1), une première mâchoire de serrage (10) s'appliquant contre les deux parois (3, 4) formant l'angle saillant (6) et contre les contours (8) cintrés adjacents.

2. Dispositif de serrage selon la revendication 1, **caractérisé en ce que** la première mâchoire de serrage (10) est maintenue en tension par les moyens de serrage (13) contre l'une des parois (3) formant l'angle saillant (6), et s'applique contre l'autre des parois (4).

3. Dispositif de serrage selon la revendication 1 ou 2, **caractérisé en ce que** deux mâchoires de serrage (9, 10) sont prévues.

4. Dispositif de serrage selon au moins l'une quelconque des revendications 1 à 3, **caractérisé en ce qu'**au moins la première mâchoire de serrage (10) est adaptée à la forme de la colonne (1).

5. Dispositif de serrage selon au moins l'une quelconque des revendications 1 à 4, **caractérisé en ce que** la première mâchoire de serrage (10) peut être amenée en appui contre la colonne de chaque côté d'une rainure (7) formée par les parois (3, 4) formant l'angle saillant (6).
